# EUROPÄISCHE PATENTSCHRIFT

(11) **EP 1 221 309 B1**
(45) Veröffentlichungstag und Bekanntmachung des Hinweises auf die Patenterteilung: **28.02.2007**
(21) Anmeldenummer: 01130670.1
(22) Anmeldetag: 21.12.2001
(51) Int. Cl.: A61C 1/00

(54) **Medizinisches oder dentalmedizinisches Gerät mit einer Zuführungsleitung für eine Flüssigkeit**
Medical or dental instrument with a supply line for a liquid
Instrument médical ou dentaire avec un conduit d'alimentation pour un liquide

(30) Priorität: 05.01.2001 DE 10100361
(43) Veröffentlichungstag der Anmeldung: 10.07.2002
(73) Patentinhaber: Kaltenbach & Voigt GmbH, 88400 Biberach / Riss (DE)
(72) Erfinder: Mösslang, Hubert, 89610 Oberdischingen (DE); Wiest, Gebhard, 88454 Hochdorf (DE); Wenger, Georg, 88433 Schemmerhofen (DE); Eberle, Jörg, 88441 Mittelbiberach (DE)
(74) Vertreter: Schmidt-Evers, Jürgen

(56) Entgegenhaltungen:
- US-A- 4 830 210
- US-A- 4 836 414
- US-A- 5 503 553
- US-A- 5 927 977

## Beschreibung

Die Erfindung betrifft ein medizinisches oder dentalmedizinisches Gerät nach dem Oberbegriff des Anspruches 1.

Beim Arbeiten mit einem betreffenden Gerät wird eine Flüssigkeit benötigt, die im Funktionsbetrieb durch eine Zuführungsleitung der Behandlungs- oder Bearbeitungsstelle zugeführt wird. Bei einem Gerät zur Behandlung des menschlichen oder tierischen Körpers bedarf es einer Flüssigkeit, die gesundheitlich unbedenklich ist. Wenn eine Flüssigkeit dieser Qualität, z. B. aus dem öffentlichen Wassernetz, nicht zur Verfügung steht, ist es bekannt, die Flüssigkeit aus einem dem Behandlungsgerät zugeordneten Behälter, einer sogenannten Wasserflasche, zu entnehmen. Hierzu dient eine Verbindungsvorrichtung für den Behälter mit einer Einschraubbuchse, in die der Behälter mit einem Gewindestutzen für seinen Anschluß von unten eingeschraubt wird. Vor dem Verschrauben ist ein die Einschraubbuchse nach unten überragendes Einlaßende der Zuführungsleitung in die Öffnung des Behälters einzuführen. Des weiteren weist das Gerät eine Druckgasleitung auf, die im Bereich der Einschraubbuchse endet, und in der ein erstes Ventil zum Öffnen und Schließen der Druckgasleitung angeordnet ist. Nach dem Anschrauben des mit Flüssigkeit gefüllten Behälters wird das Ventil manuell geöffnet, so daß das Druckgas sich in den Behälter fortsetzen und die darin befindliche Flüssigkeit unter Druck setzen kann, die durch die Zuführungsleitung ausströmt, wenn ein im Bereich der Zuführungsleitung angeordnetes zweites Ventil geöffnet wird. Für eine Demontage oder für einen Austausch des Behälters ist es erforderlich, das Ventil vor dem Abschrauben des Behälters manuell zu schließen. Beim Abschrauben des Behälters entspannt sich dann der im Behälter noch befindliche Gasdruck, und ein gefüllter Behälter kann montiert werden.

Ferner beschreibt die US 4,830,210 eine Verschlusseinrichtung für Flaschen, welche zur Bereitstellung einer Flüssigkeit beispielsweise an medizinischen oder dentalmedizinischen Geräten vorgesehen sind. Die Verschlusseinrichtung ist dabei in besonderer Weise ausgebildet, um eine manipulationssichere Abfüllung der Flüssigkeit zu gewährleisten. Hierzu weist die Flasche eine die Flaschenöffnung abdeckende Verschlussscheibe auf, welche lediglich geöffnet werden kann, indem zuerst ein zur Ermöglichung einer relativen Drehung der Verschlussscheibe entsprechend angepasstes Aufsatzteil an der Flasche festgelegt wird.

Der Erfindung liegt die Aufgabe zugrunde, ein medizinisches oder dentalmedizinisches Gerät nach dem Oberbegriff des Anspruchs 1 so auszugestalten, daß der Bedienungsaufwand verringert ist.

Diese Aufgabe wird durch die Merkmale des Anspruchs 1 gelöst. Vorteilhafte Weiterbildungen der Erfindung sind in den Unteransprüchen beschrieben

Beim erfindungsgemäßen Gerät ist die Einschraubbuchse in einem Drehlager drehbar an einem Behälterträger gelagert und sie weist einen Nocken auf, der in der in die Einschraubrichtung gerichteten Drehendstellung das vorher geschlossene Ventil öffnet. Hierdurch werden beim Verbinden des Behälters automatisch das Ventil geöffnet und der Behälter unter Druck gesetzt, so daß die darin befindliche Flüssigkeit bereit ist, nach einer Öffnung des zweiten Ventils, aus dem Instrument auszuströmen. Eine besondere manuelle Maßnahme zum Öffnen des ersten Ventils ist nicht erforderlich. Die erfindungsgemäße Ausgestaltung ermöglicht somit eine wesentliche Reduzierung des Bedienungsaufwandes. Außerdem wird die Gefahr beseitigt, daß das erste Ventil vergessen wird zu öffnen, was zu beträchtlichen Störungen bei einer nachfolgenden Nutzung des Geräts führen würde.

Es ist außerdem vorteilhaft, das erste Ventil so auszugestalten, daß es bei seiner Schließung zugleich eine Entlüftung des Behälterinnenraums ermöglicht. Hierdurch gibt es beim Abschrauben kein Entweichen des Druckgases und dabei entstehende Geräusche.

Nachfolgend werden vorteilhafte Ausgestaltungen eines erfindungsgemäßen Ausführungsbeispiels anhand von Zeichnungen näher erläutert. Es zeigt
- Fig. 1: ein medizinisches oder dentalmedizinisches Gerät in Form eines Behandlungsstuhls mit einer Verbindungsvorrichtung für einen Behälter in der Seitenansicht;
- Fig. 2: die Verbindungsvorrichtung in vergrößerter Schnittdarstellung;
- Fig. 3: die Verbindungsvorrichtung in der Draufsicht;
- Fig. 4: einen schematischen Funktionsplan für ein erstes Ventil in einer Druckgasleitung, die den Innenraum des Behälters in seiner mit der Verbindungsvorrichtung verbundenen Arbeitsstellung zeigt;
- Fig. 5: die Verbindungsvorrichtung gemäß Fig. 2 in abgewandelter Ausgestaltung und vergrößerter Schnittdarstellung.

Die Hauptteile des in seiner Gesamtheit mit 1 bezeichneten Gerätes bzw. Behandlungsstuhls sind ein Patientensitz 2 mit einer Rückenlehne und auch einer Kopfstütze, der insbesondere höhenverstellbar auf einer Stuhlbasis 3 gelagert ist. Neben dem Patientensitz 2 sind auf einem Gehäuse 4 ein Speibecken 5 mit einer Spüleinrichtung und ein Wasserbecher 6 mit einem Einlaßhahn 7 für Wasser angeordnet. Im Gehäuse 4 ist eine in ihrer Gesamtheit mit 8 bezeichnete Versorgungseinrichtung installiert. Außerdem sind ein oder mehrere Behandlungsinstrumente 9, z. B. mit einem Spritzhandstück und einem Bohrhandstück vorgesehen, die jeweils durch eine flexible Versorgungsleitung 11 mit der Versorgungseinrichtung 8 verbunden sind und an bzw. auf einer Ablagevorrichtung 12 deponierbar sind, die vorzugsweise horizontal schwenkbar, z. B. am Gehäuse 4 gelagert ist. Zum Ein- und Ausschalten verschiedener Funktionen des Gerätes 1, z. B. Bohrerantrieb oder Ausspritzen einer Behandlungsflüssigkeit aus dem Behandlungsinstrument 9, ist ein Schalter 10 vorgesehen, z. B. ein Fußschalter.

Im oder am Gehäuse 4 ist an handhabungsfreundlich zugänglicher Stelle eine Verbindungsvorrichtung 13 für einen Behälter 14 angeordnet, der einen Vorrat für die Behandlungsflüssigkeit, bildet und nach Entleerung durch Verbrauch bei Patientenbehandlungen durch einen vollen Behälter 14 ausgetauscht wird.

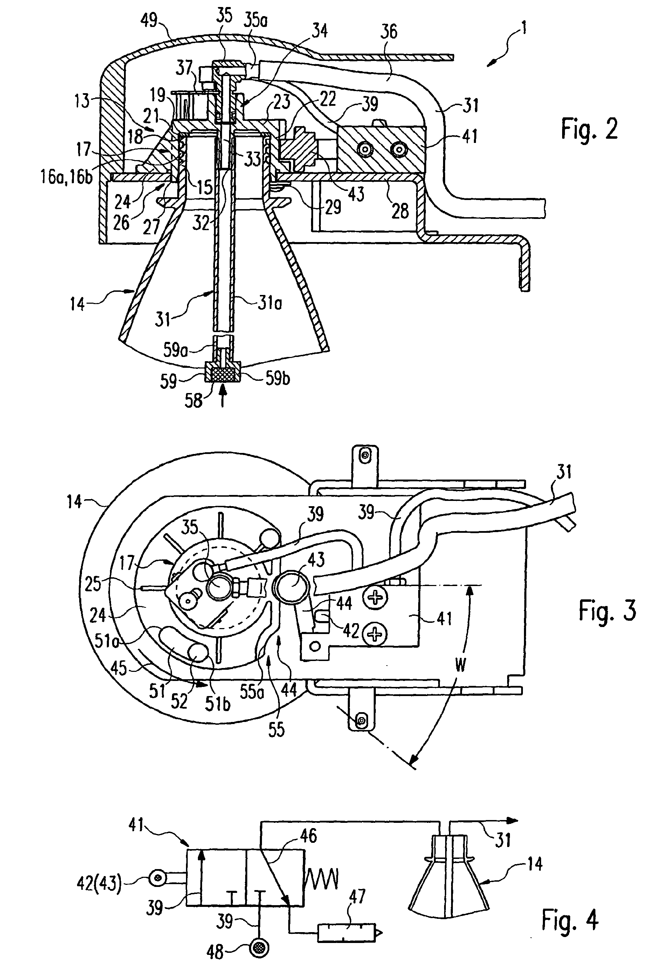

Der Behälter 14 weist gemäß Fig. 2 an seinem oberen Ende einen etwa vertikalen Gewindestutzen 15 mit einem Außengewinde 16a auf, das vorzugsweise ein zweigängiges Gewinde ist. Die Verbindungsvorrichtung 13 weist eine unterseitig offene Einschraubbuchse 17 mit einem Innengewinde 16b auf, in das der Gewindestutzen 15 so weit einschraubbar ist, daß eine Schulter 18 am Behälter 14 an einer Schulter 19 an der Einschraubbuchse 17 dicht aneinanderliegen, z. B. bei Zwischenlagerung eines Dichtringes 21. Beim vorliegenden Ausführungsbeispiel ist die Schulter 18 durch den oberen Rand des Gewindestutzens 15 gebildet und die Gegenschulter 19 durch den Grund der Einschraubausnehmung der Einschraubbuchse 17 gebildet. Die Einschraubbuchse 17 weist die Form eines auf dem Kopf stehenden Topfes auf mit einer Umfangswand 22, einer Deckenwand 23 und einem unterseitigen Flansch 24, der mit der Umfangswand 22 durch Verstärkungsrippen 25 stabilisiert sein kann.

Die Einschraubbuchse 17 ist in einem Drehlager 26 frei drehbar gelagert, das z. B. durch eine etwa vertikale Bohrung 27 in einem plattenförmigen Trägerteil 28 gebildet ist, in die die Einschraubbuchse 17 mit dem unteren Rand ihrer Umfangswand 22 von oben einfaßt und mit einem daran befestigten Sicherungsteil 29 untergreift.

Von der Unterseite der Deckenwand 23 erstreckt sich ein Zuführungsleitungsabschnitt 31a in Form eines Rohres oder flexiblen Schlauches nach unten, der so lang bemessen ist, daß er bis in den Grundbereich des angeschraubten Behälters 14 reicht, und der das Anfangsende einer Zuführungsleitung 31 zum Zuführen von Flüssigkeit zum wenigstens einen Behandlungsinstrument 9 bildet. Der Zuführungsleitungsabschnitt 31a kann auf einen von der Deckenwand 23 nach unten ragenden Anschlußstutzen 32 aufgesteckt oder aufgeschraubt sein. Vom Anschlußstutzen 32 erstreckt sich ein Kanal 33 durch die Deckenwand 23 und eine an ihrer Oberseite angeordnete Steckkupplung 34 mit einer zylindrischen Steckausnehmung und einem darin von oben mit Bewegungsspiel eingesteckten zylindrischen Steckzapfen, der an einem sich gerade oder winkelförmig erstreckenden Steckkupplungsteil 35 angeordnet ist, das an seinem dem Steckzapfen 5 gegenüberliegenden Ende einen Anschlußstutzen 35a aufweist, der mit einer Verbindungsleitung 36 in Form eines Rohres oder eines flexiblen Schlauches, z. B. durch Aufstecken, verbunden ist, die an ihrem anderen Ende mit dem Behandlungsinstrument 9 verbunden ist oder sich bis zur Behandlungsstelle am Patienten erstreckt und die Zuführungsleitung 31 ebenfalls bildet. Eine Längsarretierung des Steckzapfens in der Steckausnehmung kann durch eine Sicherungsscheibe 37 gebildet sein, die an der Oberseite der Einschraubbuchse 17 befestigt ist und in eine in die Mantelfläche des Steckzapfens eingearbeitete Ringnut einfaßt. Die Steckkupplung gewährleistet eine freie Drehbarkeit in Sinne einer Drehkupplung zwischen der Einschraubbuchse 17 und dem Steckzapfen. Deshalb kann die Einschraubbuchse 37 gedreht werden, ohne daß die Verbindungsleitung 36 mitbewegt werden muß. Diese kann somit aus einer unbiegsamen Rohrleitung bestehen. Sie kann jedoch auch flexibel sein, z. B. durch einen Schlauch gebildet sein.

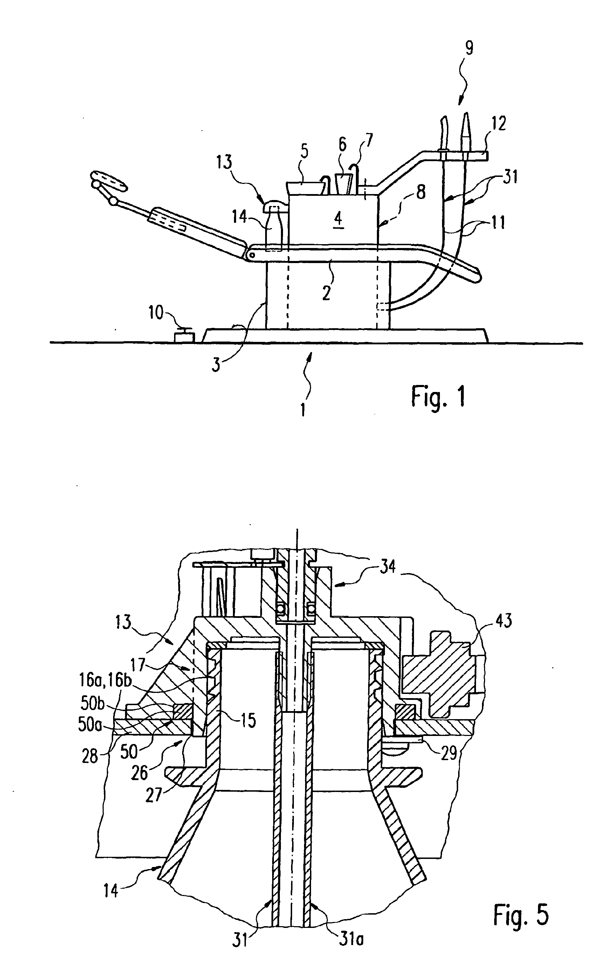

In gleicher Weise kann eine Druckleitung 39 für ein strömungsfähiges Druckmittel, insbesondere Druckluft, mit der Einschraubbuchse 17 verbunden sein. Um Wiederholungen zu vermeiden, wird deshalb auf die Beschreibung für den Anschluß der Verbindungsleitung 36 verwiesen. Die Druckleitung 39 braucht sich jedoch nicht bis in den Grundbereich des Behälters 14 erstrecken, denn sie braucht lediglich in den oberen Bereich des Innenraums des Behälters 14 zu münden, um dessen Innenraum unter Überdruck zu setzen. Ein die Deckenwand 23 durchsetzender und mit der Druckleitung 39 in Verbindung stehender Druckkanal ist vorhanden, jedoch in Fig. 1 verdeckt und deshalb nicht dargestellt. Es kann deshalb auch die Druckleitung 39 durch einen starren Rohrleitungsabschnitt oder einen flexiblen Schlauch gebildet sein.

In der Druckleitung 39 ist ein Ventil 41 angeordnet, das sich in seiner Ruhestellung in der Schließstellung befindet und das durch eine Verschiebung seines Ventilnockens 42 zu öffnen ist. Dem Ventilnocken 42 kann ein Vorschaltnocken 43 an einem Nockenhebel 44, der gegen den Ventilnocken 42 wirkt, vorgeschaltet sein. Der Ventilnocken 42 oder der Vorschaltnocken 43 wirken mit einem am Umfang der Einschraubbuchse 17 angeordneten Schaltnocken 44 derart zusammen, daß in der Drehanfangsstellung der Einschraubbuchse 17 gemäß Fig. 3 der Vorschaltnocken 43 bzw. der Ventilnocken 42 sich in ihrer Freigabestellung befinden, in der die Druckleitung 39 geschlossen ist. Beim Einschrauben des Behälters 14 wird die Einschraubbuchse 17 in Richtung des Pfeiles 45 gedreht, wobei der Schaltnocken 44 das Ventil 41 in seine Offenstellung verstellt. Vorzugsweise weist das Ventil 41 auch einen Entlüftungskanal 46 auf, der in der Schließstellung des Ventils 41 den Behälterinnenraum mit der Umgebung zwecks Entlüftung verbindet. Das Ventil 41 kann durch ein 3/2-Wegeventil gebildet sein, das in Fig. 4 in seiner die Druckleitung 39 schließenden Stellung dargestellt ist, in der der Entlüftungskanal 46 zwecks Entlüftung des Behälterinnenraums offen ist und vorzugsweise mit einem Schalldämpfer 47 verbunden ist. In Fig. 4 ist eine Druckquelle für ein Druckgas, insbesondere für Druckluft, mit 48 bezeichnet. Das Ventil 41 kann neben dem Einschraubteil 17 auf dem Trägerteil 28 angeordnet und z. B. verschraubt sein. Wie Fig. 2 deutlich zeigt, kann die Verbindungsvorrichtung 13 durch eine auf das Trägerteil 28 aufgesetzte Schutzkappe 49 abgedeckt sein. Der Überdruck im Behälter 14 kann jedoch auch beim Losschrauben durch den Gewindeeingriff entweichen, so daß auf einen Entlüftungskanal 4b verzichtet werden kann.

Die freie Drehbarkeit der Einschraubbuchse 17 ist vorzugsweise durch jeweils einen Anschlag so begrenzt, daß sie lediglich zwischen ihrer Drehanfangsstellung und ihrer Drehendstellung verdrehbar ist. Hierzu kann ein gekrümmtes Langloch 51 vorzugsweise im Flansch 24 dienen, durch das sich ein Anschlagstift 52 erstreckt und deren vorbeschriebene Bewegungen begrenzt. Der Anschlagstift 52 kann z. B. am Trägerteil 28 angeordnet sein und davon nach oben abstehen. Dabei werden die Anschläge durch die Langlochenden 51a, 51b gebildet.

Beim Anschließen des Behälters 14 an die Verbindungsvorrichtung 13, hier die Einschraubbuchse 17, bedarf es eines bestimmten Drehmomentes M1, was zum einen durch die Reibung beim Schrauben und zum anderen durch einen axialen Andruck des Gewindestutzens 15 an der Dichtung 21 vorgegeben ist. Dieses Drehmoment M1 kann durch manuelles Ergreifen des Behälters 14 leicht aufgebracht werden. Um zu verhindern, daß die Einschraubbuchse 17 beim Anschrauben des Behälters 14 mitdreht und das Ventil 41 zwecks Druckanschluß betätigt bevor der Gewindestutzen 15 dicht mit der Einschraubbuchse 17 verbunden ist, ist das Drehlager 26 so ausgebildet, daß die Einschraubbuchse 17 darin nur mit einem Drehmoment M2 drehbar ist, das größer ist als das vorgenannte Drehmoment M1. Das Drehmoment M2 ist ebenfalls so groß bemessen, daß es manuell problemlos aufgebracht werden kann. Infolge dessen wird beim Anschließen eines Behälters 14 zunächst der Behälter 14 dicht mit der Einschraubbuchse 17 verbunden und dann wird durch manuelles Weiterdrehen die Einschraubbuchse 17 aus ihrer Drehanfangsstellung in ihre Drehendstellung gedreht, in der das Ventil 41 betätigt und der Behälter 14 mit Druck beaufschlagt wird. Die Druckbeaufschlagung bewirkt eine Vergrößerung der zwischen dem Behälter 14 und der Einschraubbuchse 17 wirksamen Verbindungskräfte. Unter Druck läßt sich der Behälter 14 deshalb nur mit einem manuell ebenfalls problemlos aufbringbaren Drehmoment M3 durch Abschrauben lösen, das größer ist als das vorgenannte Drehmoment M2.

Das Drehmoment M2 kann z. B. durch eine Schwergängigkeit im Drehlager 26 oder eine Bremse erreicht werden, deren Bremskraft vorzugsweise einstellbar ist. Beim Ausführungsbeispiel nach Fig. 5, bei dem gleiche oder vergleichbare Teile mit gleichen Bezugszeichen versehen sind, ist eine solche Bremse 50 vorhanden und vorzugsweise in das Drehlager 26 integriert. Die Bremse 50 weist ein vorzugsweise ringförmiges Bremselement 50a auf, das an dem einen Teil des Drehlagers 26, hier an der Einschraubbuchse 17, angeordnet ist, vorzugsweise in einer Ringnut 50b, z. B. im Flansch 24. Das Bremselement 50a kann durch einen Ring aus elastischem Material, z. B. Gummi oder Kunststoff, gebildet sein. Beim vorliegenden Ausführungsbeispiel ist die axiale Querschnittsabmessung des Bremselements 50a so groß bemessen, daß in der in Fig. 5 dargestellten Funktionsstellung das Bremselement 50a axial elastisch komprimiert ist und dadurch mit einer elastischen Bremskraft gegen das andere Drehlagerteil drückt. Hierdurch wird das Drehmoment M2 sichergestellt. Um das Drehmoment M2 an eine bestimmte Größe anpassen zu können, ist es vorteilhaft, die vorzugsweise axiale Spannkraft, mit der die betreffenden Reibteile gegeneinander vorgespannt werden, einstellbar auszubilden. Beim vorliegenden Ausführungsbeispiel kann dies dadurch erreicht werden, daß das Sicherungsteil 29, z. B. ein den Rand der Lagerbohrung 27 untergreifender Randflansch, axial verstellbar und in der verstellten Position feststellbar ist, z. B. schraubbar ist oder mit einer Gewindeschraube verstellbar ist.

Im Rahmen der Erfindung ist die Verbindungsvorrichtung 13 auch dann funktionsfähig, wenn die Einschraubbuchse 17 frei drehbar gelagert ist, also ohne Bremse oder Schwergängigkeit ausgebildet ist. In einem solchen Fall ist es möglich, die Einschraubbuchse 17 beim Anschließen des Behälters 14 manuell in der Drehanfangsstellung zu halten. In einem solchen Fall wäre jedoch eine Zweihandbedienung erforderlich, während beim Vorhandensein einer Bremse oder Schwergängigkeit eine Einhandbedienung möglich ist.

Um beim Fehlen einer Bremse oder Schwergängigkeit zu vermeiden, daß die Einschraubbuchse 17 in ihrer Drehendstellung verbleibt und sich mit dem Behälter 14 nicht zurückdreht, was z. B. durch Vibrationen im Funktionsbetrieb des Gerätes 1 hervorgerufen werden kann, ist es vorteilhaft, der Einschraubbuchse 17 in ihrer Drehendstellung eine Positioniervorrichtung 55 zuzuordnen, die eine ungewollte Rückdrehung verhindert. Vorzugsweise ist die Positioniervorrichtung 55 durch eine elastisch wirksame Verrastungsvorrichtung gebildet, deren Federkraft nur so groß ist, daß die Verrastung beim Ein- und Ausschrauben des Behälters 14 und der dabei stattfindenden Drehung der Einschraubbuchse 17 überdrückt wird. Beim vorliegenden Ausführungsbeispiel ist die Positioniervorrichtung durch eine Rastvertiefung 55a am Schaltnocken 44 gebildet, in die der unter Federdruck stehende Ventilnocken 42 bzw. Vorschaltnocken 43 einrasten und beim Rückdrehen selbsttätig herausgedrückt wird. Die Positioniervorrichtung kann auch bei einer Bremse oder Schwergängigkeit vorhanden sein, wie es beim Ausführungsbeispiel nach Fig. 5 der Fall ist.

Nachfolgend wird ein Austausch des Behälters 14 wie folgt beispielhaft beschrieben. Der durch die Verbindungsvorrichtung 13 angeschlossene Behälter 14 wird manuell in die Löserichtung gedreht, wobei aufgrund des wirksamen Drehmoments M3 die Einschraubbuchse 17 von der Drehendstellung in die Drehanfangsstellung mitgedreht wird. Hierbei gibt der Schaltnocken 44 den Ventilnocken frei, wobei das Ventil 41 die Druckleitung 39 aufgrund der vorhandenen Ventilfeder selbsttätig schließt. In dieser Drehposition wird die Einschraubbuchse 17 durch den einen Anschlag bildenden Stift 52 in ihrer Drehbewegung begrenzt. Der Drehwinkel W dieser Drehbewegung beträgt weniger als 360 °. Ein Winkel von 180 oder 90 ° ist noch vorteilhafter, um den Drehaufwand zu verringern. Bei der erfindungsgemäßen Ausgestaltung beträgt der Drehwinkel W weniger als 90 °, insbesondere nur etwa 45 °. Bereits in dieser Drehstellung, in der der Gewindeeingriff noch nicht verdreht worden ist, wird der Innenraum des Behälters 14 durch die Entlüftungsleitung 46 des Ventils 41 entlüftet.

Beim weiteren Losschrauben des Behälters 14 wird der Gewindeeingriff durch Ausschrauben gelöst und es kann ein neuer mit Behandlungsflüssigkeit gefüllter Behälter 14 eingeschraubt werden. Beim Einschrauben wird nach dem Festschrauben die Einschraubbuchse 17 in die entgegengesetzte Anschlagstellung gedreht, nämlich in die Drehendstellung, wobei der Schaltnocken 44 das Ventil 41 öffnet und der Druck in der Druckleitung 39 sich in den Behälterinnenraum fortpflanzen kann, so daß dieser für eine Abgabe der Behandlungsflüssigkeit bereit ist. Durch ein Öffnen eines nicht dargestellten zweiten Ventils in der Zuführungsleitung 31, die sich jeweils durch die flexible Versorgungsleitung 11 erstreckt, kann die Abgabe der Behandlungsflüssigkeit aus dem Behandlungsinstrument 9 gesteuert werden, z. B. mittels dem Fußschalter 10, den die Bedienungs- oder Behandlungsperson betätigt.

Um die Zuführungsleitung 31 vor Verschmutzung zu schützen, ist es vorteilhaft, darin ein Sieb oder Filter 58 anzuordnen, das dazu dient, die aus dem Behälterinnenraum unter der Druckwirkung in die Zuführungsleitung 31 einströmende Flüssigkeit zu sieben oder zu filtern. Beim vorliegenden Ausführungsbeispiel ist ein Sieb oder Filter 58 am Einlaßende der Zuführungsleitung 31 bzw. des Schlauches 31a angeordnet. Vorzugsweise ist eine hülsenförmige Buchse 59 vorgesehen, die mit einem verjüngten Zapfen 59a in oder auf die Zuführungsleitung 31 klemmend steckbar ist und eine im Querschnitt vergrößerte Buchse 59b aufweist, in der das Sieb oder Filter 58 fest eingesetzt ist. Hierdurch ist eine preiswert herstellbare und montierbare Patrone gebildet, die als vorgefertigtes Bauteil und Austauschteil leicht und schnell montierbar oder demontierbar ist.

## Patentansprüche

1. Medizinisches oder dentalmedizinisches Gerät (1) mit einer Zuführungsleitung (31) für eine Flüssigkeit und mit einer Einschraubbuchse (17), an die ein Behälter (14) für die Flüssigkeit anschraubbar ist, wobei die Zuführungsleitung (31) sich vom Innenraum des Behälters (14) nach außen erstrecken kann und die Einschraubbuchse (17) durchsetzt, wobei eine Druckgasleitung (39) die Einschraubbuchse (17) von außen nach innen durchsetzt, und wobei die Druckgasleitung (39) durch ein Ventil (41) zu schließen und zu öffnen ist,
**dadurch gekennzeichnet,**
**daß** die Einschraubbuchse (17) in einem Drehlager (26) drehbar gelagert ist und mit einem Schaltnocken (44) in Wirkverbindung steht, der in einer in die Anschraubrichtung (45) verdrehten Drehstellung der Einschraubbuchse (17) das vorher geschlossene Ventil (41) öffnet.

2. Medizinisches oder dentalmedizinisches Gerät nach Anspruch 1,
**dadurch gekennzeichnet,**
**daß** die Drehbewegung der Einschraubbuchse (17) in einer Drehanfangsstellung und einer Drehendstellung begrenzt ist.

3. Medizinisches oder dentalmedizinisches Gerät nach Anspruch 1 oder 2,
**dadurch gekennzeichnet,**
**daß** das Ventil (41) einen Entlüftungskanal (46) aufweist zur Entlüftung des Innenraums des Behälters (14) in seiner Schließstellung.

4. Medizinisches oder dentalmedizinisches Gerät nach einem der vorherigen Ansprüche,
**dadurch gekennzeichnet,**
**daß** die Zuführungsleitung (31) und/oder die Druckgasleitung (39) durch eine koaxial und/oder axparallel angeordnete Drehkupplung mit der Einschraubbuchse (17) verbunden ist bzw. sind und vorzugsweise durch eine flexible Leitung gebildet ist bzw. sind.

5. Medizinisches oder dentalmedizinisches Gerät nach einem der vorherigen Ansprüche,
**dadurch gekennzeichnet,**
**daß** der Schaltnocken (44) an der Einschraubbuchse (17) angeordnet ist, insbesondere an deren Umfang.

6. Medizinisches oder dentalmedizinisches Gerät nach einem der vorherigen Ansprüche,
**dadurch gekennzeichnet,**
**daß** eine Positioniervorrichtung (55) zum Positionieren der Einschraubbuchse (17) in ihrer Drehendstellung vorgesehen ist.

7. Medizinisches oder dentalmedizinisches Gerät nach Anspruch 6,
**dadurch gekennzeichnet,**
**daß** die Positioniervorrichtung (55) durch eine Verrastungsvorrichtung gebildet ist, die vorzugsweise beim manuellen Drehen überdrückbar ist.

8. Medizinisches oder dentalmedizinisches Gerät nach Anspruch 7,
**dadurch gekennzeichnet,**
**daß** die Verrastungsvorrichtung eine Rastvertiefung (55a) am Schaltnocken (44) aufweist, in die der Ventilnocken (42, 43) einrastet.

9. Medizinisches oder dentalmedizinisches Gerät nach einem der vorherigen Ansprüche,
**dadurch gekennzeichnet,**
**daß** die Einschraubbuchse (17) die Form eines auf dem Kopf stehenden Topfes aufweist und das Drehlager (26), vorzugsweise am unteren Rand der Umfangswand (22) der Einschraubbuchse (17) angeordnet ist.

10. Medizinisches oder dentalmedizinisches Gerät nach Anspruch 9,
**dadurch gekennzeichnet,**
**daß** die Einschraubbuchse (17) einen Flansch (24) aufweist und der Schaltnocken (44) am Flansch (24) angeformt ist.

11. Medizinisches oder dentalmedizinisches Gerät nach einem der vorherigen Ansprüche,
**dadurch gekennzeichnet,**
**daß** die Einschraubbuchse (17) um einen maximalen Drehwinkel (W) von weniger als 360 °, insbesondere weniger als 90 °, drehbar ist.

12. Kombination bestehend aus einem medizinischen oder dentalmedizinischen Gerät nach einem der vorherigen Ansprüche sowie einem Behälter (14) für die Flüssigkeit,
**dadurch gekennzeichnet,**
**daß** das Drehlager (26) schwergängig ist oder eine Bremse (50) aufweist mit einem Drehmoment (M2), das größer ist als das beim Anschließen des Behälters (14) durch Drehen auf die Einschraubbuchse (17) übertragene Drehmoment (M1).

13. Kombination bestehend aus einem medizinischen oder dentalmedizinischen Gerät sowie einem Behälter (14) nach Anspruch 12,
**dadurch gekennzeichnet,**
**daß** die Größe der Bremskraft durch ein Einstellelement einstellbar ist.

## Claims

1. Medical or dental-medical apparatus (1), having a delivery line (31) for a liquid and having a screw bushing (17) onto which a container (14) for the liquid can be screwed, wherein the delivery line (31) can extend from the interior of the container (14) to the outside and penetrates the screw bushing (17), a compressed gas line (39) penetrating the screw bushing (17) from the outside inwardly, and the compressed gas line (39) being closable and openable by means of a valve (41),
**characterized in that**,
the screw bushing (17) is rotatably mounted in a rotary bearing (26) and stands in working connection with a switch cam (44) which, in a rotary position of the screw bushing (17) which is rotated in the screwing-on direction (45), opens the previously closed valve (41).

2. Medical or dental-medical apparatus according to claim 1,
**characterized in that**,
the rotary movement of the screw bushing (17) is bounded at an initial rotary position and a final rotary position.

3. Medical or dental-medical apparatus according to claim 1 or 2,
**characterized in that**,
the valve (41) has a venting channel (46) for venting the interior of the container (14) in its closed position.

4. Medical or dental-medical apparatus according to any preceding claim,
**characterized in that**,
the delivery line (31) and/or the compressed gas line (39) is or are connected with the screw bushing (17) by means of a coaxially and/or axis-parallel arranged rotary coupling, and is or are preferably formed by means of a flexible line.

5. Medical or dental-medical apparatus according to any preceding claim,
**characterized in that**,
the switch cam (44) is arranged on the screw bushing (17), in particular at its periphery.

6. Medical or dental-medical apparatus according to any preceding claim,
**characterized in that**,
there is provided a positioning device (55) for positioning the screw bushing (17) in its final rotary position.

7. Medical or dental-medical apparatus according to claim 6,
**characterized in that**,
the positioning device (55) is formed by means of a latching device, which preferably can be overcome with manual turning.

8. Medical or dental-medical apparatus according to claim 7,
**characterized in that**,
the latching device has a latch depression (55a) on the switch cam (44) into which the valve cam (42, 43) latches.

9. Medical or dental-medical apparatus according to any preceding claim,
**characterized in that**,
the screw bushing (17) has the shape of an upturned pot and the rotary bearing (26) is arranged preferably at the lower edge of the peripheral wall (22) of the screw bushing (17).

10. Medical or dental-medical apparatus according to claim 9,
**characterized in that**,
the screw bushing (17) has a flange (24) and the switch cam (44) is formed on the flange (24).

11. Medical or dental-medical apparatus according to any preceding claim,
**characterized in that**,
the screw bushing (17) is rotatable through a maximum rotary angle (W) of less than 360°, in particular less than 90°.

12. Combination comprised of a medical or dental-medical apparatus according to any preceding claim and a container (14) for the liquid,
**characterized in that**,
the rotary bearing (26) is stiff or has a brake (50) having a torque (M2) which is greater than the torque (M1) transferred to the screw bushing (17) upon connection of the container (14) by means of rotation.

13. Combination comprised of a medical or dental-medical apparatus and a container (14) according to claim 12,
**characterized in that**,
the size of the braking force is adjustable by means of an adjustment element.

## Revendications

1. Appareil médical ou médico-dentaire (1), comportant une conduite d'alimentation (31) pour un liquide et une douille de vissage (17) à laquelle peut être vissé un réservoir de liquide (14), la conduite d'alimentation (31) pouvant s'étendre depuis l'intérieur du réservoir (14) vers l'extérieur et passer à travers la douille de vissage (17), une conduite de gaz sous pression (39) traversant la douille de vissage (17) de l'extérieur vers l'intérieur et la conduite de gaz sous pression (39) étant fermée et ouverte au moyen d'une vanne (41),
**caractérisé en ce que**
la douille de vissage (17) est montée rotative dans un palier de rotation (26) et est en liaison active avec une came de commande (44), qui ouvre la vanne (41) préalablement fermée lorsque la douille de vissage (17) est dans une position de rotation tournée dans le sens de vissage (45).

2. Appareil médical ou médico-dentaire selon la revendication 1, **caractérisé en ce que** le mouvement de rotation de la douille de vissage (17) est limité par une position initiale de rotation et une position finale de rotation.

3. Appareil médical ou médico-dentaire selon la revendication 1 ou 2, **caractérisé en ce que** la vanne (41) comporte un canal de ventilation (46) en vue de purger l'air contenu à l'intérieur du réservoir (14) dans sa position de fermeture.

4. Appareil médical ou médico-dentaire selon l'une quelconque des revendications précédentes, **caractérisé en ce que** la conduite d'alimentation (31) et/ou la conduite de gaz sous pression (39) est ou sont reliées à la douille de vissage (17) par l'intermédiaire d'un raccord rotatif agencé coaxialement et/ou parallèlement à l'axe et, de préférence, est ou sont formées par une conduite flexible.

5. Appareil médical ou médico-dentaire selon l'une quelconque des revendications précédentes, **caractérisé en ce que** la came de commande (44) est située sur la douille de vissage (17), en particulier sur la périphérie de celle-ci.

6. Appareil médical ou médico-dentaire selon l'une quelconque des revendications précédentes, **caractérisé en ce qu'**un dispositif de positionnement (55) est prévu pour positionner la douille de vissage (17) dans sa position finale de rotation.

7. Appareil médical ou médico-dentaire selon la revendication 6, **caractérisé en ce que** le dispositif de positionnement (55) est formé par un dispositif de blocage qui peut être contourné de préférence lors d'une rotation manuelle.

8. Appareil médical ou médico-dentaire selon la revendication 7, **caractérisé en ce que** le dispositif de blocage comporte un creux d'arrêt (55a) sur la came de commande (44), dans lequel s'enclenche un taquet (42, 43) de la vanne.

9. Appareil médical ou médico-dentaire selon l'une quelconque des revendications précédentes, **caractérisé en ce que** la douille de vissage (17) a la forme d'un godet renversé et le palier de rotation (26) est disposé de préférence sur le bord inférieur de la paroi périphérique (22) de la douille de vissage (17).

10. Appareil médical ou médico-dentaire selon la revendication 9, **caractérisé en ce que** la douille de vissage (17) comporte un collet (24) et la came de commande (44) est formée sur le collet (24).

11. Appareil médical ou médico-dentaire selon l'une quelconque des revendications précédentes, **caractérisé en ce que** la douille de vissage (17) est apte à tourner selon un angle de rotation (W) maximal inférieur à 360°, en particulier inférieur à 90°.

12. Combinaison formée par un appareil médical ou médico-dentaire selon l'une quelconque des revendications précédentes et par un réservoir de liquide (14), **caractérisée en ce que** le palier de rotation (26) est difficile à actionner ou comporte un frein (50) avec un couple de rotation (M2) supérieur au couple de rotation (M1) transmis sur la douille de vissage (17) lors du raccordement du réservoir (14) par rotation.

13. Combinaison formée par un appareil médical ou médico-dentaire et par un réservoir (14) selon la revendication 12, **caractérisée en ce que** la valeur de la force de freinage peut être réglée par un élément de réglage.
